Europäisches Patentamt

European Patent Office

Office européen des brevets

(11) Publication number: **0 353 650**
**A2**

# EUROPEAN PATENT APPLICATION

(21) Application number: **89113979.2**

(22) Date of filing: **28.07.89**

(51) Int. Cl.⁴: **C08K 5/00**

(30) Priority: **01.08.88 JP 190560/88**

(43) Date of publication of application:
**07.02.90 Bulletin 90/06**

(84) Designated Contracting States:
**BE CH DE FR GB IT LI NL SE**

(71) Applicant: **MITSUBISHI JUKOGYO KABUSHIKI KAISHA**
**5-1, Marunouchi 2-chome Chiyoda-ku Tokyo 100(JP)**

(72) Inventor: **Hayashi, Shunichi c/o Nagoya Technical Institute**
**MITSUBISHI JUKOGYO K.K. 1, Aza-Takamichi Iwatsuka-cho Nakamura-ku Nagoya Aichi Pr(JP)**

(74) Representative: **Reinhard, Skuhra, Weise**
**Friedrichstrasse 31**
**D-8000 München 40(DE)**

(54) **Polymeric elastomer composition.**

(57) The present invention is directed to a polymeric elastomer composition prepared by adding, to a polymeric elastomer, a color-generating compound in which a color tone changes reversibly in the vicinity of its glass transition point Tg. In the polymeric elastomer composition, the color change can take place around the glass transition point Tg.

EP 0 353 650 A2

## Polymeric Elastomer Composition

## 2. FIELD OF THE INVENTION AND RELATED ART STATEMENT

The present invention relates to a polymeric elastomer composition in which color change occurs in the vicinity of a glass transition point Tg. More particularly, it relates to a polymeric elastomer composition which can be extensively applied to many artilces such as temperature sensors, household goods and toys.

Heretofore, polymeric elastomer compositions which only utilize changes in modulus of elasticity in the vicinity of a glass transition point Tg have been suggested in, for example, Japanese Patent Application No. 191/1985, but in these compositions, there is the drawback that the changes in the modulus of elasticity cannot be confirmed visually, i.e., through naked eyes.

## 3. OBJECT AND SUMMARY OF THE INVENTION

In view of the above-mentioned technical level, an object of the present invention is to provide a polymeric elastomer capable of visually confirming the changes in modulus of elasticity.

The gist of the present invention resides in a polymeric elastomer composition prepared by adding, to a polymeric elastomer, a color-generating compound whose color tone changes reversibly in the vicinity of its glass transition point.

According to the present invention, the change in the modulus of elasticity in the vicinity of the glass transition point Tg appears as the change in the color tone of the color-generating compound, and therefore the change in the modulus of elasticity of the polymeric elastomer can be confirmed visually.

## 4. DETAILED DESCRIPTION OF PREFERRED EMBODIMENTS

In the present invention, any polymeric elastomer can be used, so long as it has a glass transition point Tg in the vicinity of an intended and predetermined temperature. However, polymeric elastomers which can exhibit great changes in modulus of elasticity around the glass transition point Tg are preferred, and examples of such elastomer include polyurethane elastomers, ethylene-butadiene elastomers and nitrile-butadiene elastomers.

Now, in the first place, reference will be made to the preparation of polyurethane elastomers having various glass transition points Tg's.

These polyurethane elastomers are examples of polymeric elastomers which exhibit a glass transition point Tg in the vicinity of room temperature.

In preparing such a polyurethane elastomer, an isocyanate component which is usually used in the manufacture of a polyurethane can be employed in the present invention without particular limitation. Examples of the isocyanate component are diphenylmethane diisocyanate, 2,4-and 2,6-tolylene diisocyanate, m- and p-phenylene diisocyanate, isophorone diisooyanate, hexamethylene diisocyanate, compositions thereof and mixtures thereof.

Furthermore, a polyol component which can be used in the present invention should have at least two hydroxyl groups in one molecule. Examples of the polyol component are a polyoxyalkylene polyol prepared by adding an alkylene oxide to a polyvalent alcohol or an aliphatic amine or an aromatic amine used as an initiator; a polyester polyol prepared by the condensation of an acid and an alcohol; a polytetramethylene glycol; and a polybutadiene polyol.

Examples of a chain extender which can be used in the present invention include short-chain diols such as ethylene glycol and 1,4-butanediol; diamines such as ethylenediamine and propanediamine; and isocyanate compounds with relatively low molecular weights such as an adduct of trimethylolpropane and TDI (tolylene diisocyanate).

If necessary, a known catalyst such as a tertiary amine or a metallic salt may be used.

The polyurethane elastomer can be synthesized as follows: In the first place, an isocyanate is let react with a polyol in a specific molar blend ratio [A = (NCO group)/(OH group)] in order to form a prepolymer, and a chain extender is added thereto so as to obtain a desired blend ratio [B = (chain extender)-

/(prepolymer)], followed by defoaming, casting and crosslinking reactions.

Factors which have influence on Tg and modulus of elasticity are considered to be: (1) kind of isocyanate, (2) kind of polyol, (3) kind of chain extender, (4) blend ratio A, (5) blend ratio B, (6) heat history and the like, but a certain combination of these conditions permits an arbitrary synthesis of an polyurethane elastomer having the desired glass transition point Tg and modulus of elasticity.


Examples


Various kinds of polyurethane elastomers were synthesized in accordance with the above-mentioned procesure.

The glass transition points Tg's of these polyurethane elastomers are set forth in Tables 1 and 2.

Table 1

| Example No. | Prepolymer *5 | | A = (NCO)/(OH) | Chain*5 Extender | B = (chain extender)/(prepolymer) | Tg (°C)*6 |
| | Isocyanate | Polyol | | | | |
|---|---|---|---|---|---|---|
| 1 | Isophorone Diisocyanate | BPX-55*1 | 0.62 | TDI Adduct of trimethylolprop-ane | 6<br>18 | 31<br>107 |
| 2 | Isophorone Diisocyanate/Diphenylmethane Diisocyanate = 1/1 | F15-20*2 | 0.77 | " | 6<br>12 | 6<br>15 |
| 3 | Isophorone Diisocyanate | BPE-100*3 | 0.82 | " | 12<br>18 | 48<br>92 |
| 4 | Isophorone Diisocyanate/Diphenylmethane Diisocyanate = 1/1 | BPX-33*4 | 0.82 | " | 12<br>18 | 68<br>up to 122 |

*1 Polyol made by Asahi Denka Kogyo K.K.
*2 Polyol made by Asahi Denka Kogyo K.K.
*3 Polyol made by Sanyo Chemical Industries, Ltd.
*4 Polyol made by Asahi Denka Kogyo K.K.
*5 Prepolymer process and Chain extend process were prepared by reaction in a 50% solution of 4-methyl-2-pentanone.
*6 Each Tg, which is an average value, was measured by DSC (differential type scanning calorimeter).

EP 0 353 650 A2

Table 2

| Example No. | Prepolymer | | A = (NCO)/(OH) | Chain Extender | B = (chain extender)/(prepolymer) | Tg (°C)*2 |
| | Isocyanate | Polyol | | | | |
|---|---|---|---|---|---|---|
| 5 | 2,2-Tolylene Diisocyanate | P = 1000*1 | 3 | 1,4-Butanediol | 0.6 | -5 |
| 6 | " | " | 4 | " | " | 5 |
| 7 | " | " | 5.2 | " | " | 20 |

*1 Polyol made by Asahi Denka Kogyo K.K.
*2 Each Tg, which is an average value, was measured by DSC.

EP 0 353 650 A2

As indicated in Tables 1 and 2, the glass transition point Tg can be arbitrarily selected by changing a combination of hard segments (the isocyanate and the chain extender) and soft segments (the polyol) of the polyurethane elastomer. Similarly, in the styrene-butadiene elastomer and the nitrile-butadiene elastomer, the glass transition point Tg can be arbitrarily selected by changing a ratio of hard segments (styrene or nitrile) and soft segments (butadiene).

Next, reference to a temperature-sensitive color-generating material will be made. Examples of the color-generating material include many pigments and organic compounds such as cholesteric liquid crystals, chiral nematic liquid crystals, photochromic materials, solvatochromic materials and a product called "Thermal Color OR" manufactured by Oriental Giken Kogyo Kabusiki Kaisha.

Here, however, a cholesteric liquid crystal or an organic compound which can bring about color change reversibly are selected to be used in the following explanation. This organic compound (e.g., Metamocolor made by The Pilot Pen Co., Ltd.) can generate color owing to an electron donating and accepting mechanism.

The color-generating material can be added, in an amount of 0.5 to 5% by volume, to an elastomer reactor after the addition of the chain extender and before the defoaming, casting and crosslinking reactions of the above-mentioned elastomer manufacturing process. If less than 0.5% by volume the intended effects cannot be obtained, and if more than 5% by volume the product composition tends to be brittle. Afterward, these materials are stirred and mixed therein. In this case, the respective materials should be selected so that no reaction may occur between the polymeric elastomer and the color-generating material, i.e., so that they may be physically dispersed without detriment to the functions of each other.

In an experiment, 3% by volume of an organic compound which turns violet at 31°C or less and red at a higher temperature owing to an electron-donating and accepting mechanism was mixed with a polyurethane composition having Tg = 31°C (Example No. 1 of B = 6 in Table 1). The thus obtained novel polymeric elastomer composition had a modulus of elasticity E of 2,000 kgf/mm² and assumed violet at 20°C, and had E = 18 kgf/mm² and assumed red at 40°C.

Moreover, this composition has, in addition to these characteristics, the effect of memorizing a shape. This shape memory effect means the following fact: When an external force which has been applied to the composition at a temperature higher than the glass transition point Tg is released while the composition is maintained at a temperature less than the glass transition point Tg, the deformed shape of the composition is retained as it is. Furthermore, when the temperature of the composition is raised from a level lower than the glass transition point Tg to a level higher than the glass transition point Tg, the composition then returns to the original shape. In this case, needless to say, the color tone of the composition changes reversibly in accordance with the temperatures.

In the composition of the present invention, great changes in the modulus of elasticity in the vicinity of the glass transition point Tg and the shape memory effect can be confirmed visually.

## Claims

1. A polymeric elastomer composition prepared by adding, to a polymeric elastomer, at least one color-generating compound whose color tone changes reversibly in the vicinity of glass transition point of said polymeric elastomer.

2. A polymeric elastomer composition according to claim 1, wherein said polymeric elastomer is at least one selected from the group consisting of polyurethane elastomers, ethylene-butadiene elastomers and nitrile-butadiene elastomers.

3. A polymeric elastomer composition according to claim 1, wherein said color-generating compound is at least one selected from the group consisting of cholesteric liquid crystals, chiral nematic liquid crystals, photochromic materials and solvatochromic materialss.

4. A polymeric elastomer composition according to one or more of the preceding claims, composed of a polymeric elastomer, containing 0.5 to 5 % by volume (calculated on the basis of the whole polymeric elastomer composition) of at least one color-generating compound whose color tone changes reversibly in the vicinity of the glass transition point of said polymeric elastomer.

5. A polymeric elastomer composition according to one or more of the preceding claims, wherein said polyurethane elastomers are composed of an isocyanate component, especially diphenyimethane diisocyanate, 2,4- and 2,6-tolylene diisocyanate, m- and p-phenylene diisocyanate, isophorone diisocyanate, hexamethylene diisocyanate, compositions thereof and mixtures thereof and a polyol component having at least two hydroxyl groups in one molecule, especially a polyoxyalkylene polyol prepared by adding an alkylene oxide to a polyvalent alcohol or an aliphatic amine or an aromatic amine used as an initiator, a polyester polyol prepared by the condensation of an acid and an alcohol, a polytetramethylene glycol and a polybutadiene polyol, whereby a chain extender can be used, especially short-chain diols such as ethylene glycol and 1,4-butanediol, diamines such as ethylenediamine and propanediamine, and isocyanate compounds with relatively low molecular weights such as an adduct of trimethylolpropane and TDI (tolylene diisocyanate).

6. A polymeric elastomer composition according to one or more of the preceding claims, wherein said color-generating compounds are cholesteric liquid crystals, chiral nematic liquid crystals, photochromic materials, solvatochromic materials or a product called "Thermal Color OR" manufactured by Oriental Giken Kogyo Kabushiki Kaisha.

7. Process for the preparation of polyurethane elastomers according to one or more of the preceding claims, characterized by the following steps:
In the first place, an isocyanate is let react with a polyol in a specific molar blend ration [A = (NCO group)/(OH group)] in order to form a prepolymer, and a chain extender is added thereto so as to obtain a desired blend ration [B = (chain extender)/(prepolymer)], followed by defoaming, casting and crosslinking reactions, whereby the color-generating material can be added, in an amount of 0.5 to 5 % by volume, to an elastomer reactor after the addition of the chain extender and before the defoaming, casting and crosslinking reactions of the above-mentioned elastomer manufacturing process and whereby afterward, these materials are stirred and mixed therein, whereby in this case, the respective materials should be selected so that no reaction may occur between the polymeric elastomer and the color-generating material, i.e., so that they may be physically dispersed without detriment to the functions of each other.

8. Use of the polymeric elastomer compositions according to one or more of the preceding claims in temperature sensors, household goods and toys.